(19) Europäisches Patentamt
European Patent Office
Office européen des brevets

(11) **EP 4 727 129 A1**

(12) **EUROPEAN PATENT APPLICATION**

(43) Date of publication:
**15.04.2026 Bulletin 2026/16**

(21) Application number: **24306659.4**

(22) Date of filing: **10.10.2024**

(51) International Patent Classification (IPC):
*H04N 19/33* (2014.01)    *H04N 19/103* (2014.01)
*H04N 19/147* (2014.01)    *H04N 19/176* (2014.01)
*H04N 19/187* (2014.01)

(52) Cooperative Patent Classification (CPC):
**H04N 19/147; H04N 19/103; H04N 19/176;**
**H04N 19/187; H04N 19/33;** H04N 19/19

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE PENDU, Mikael**
**35700 RENNES (FR)**
• **DE LAGRANGE, Philippe**
**35830 BETTON (FR)**
• **URBAN, Fabrice**
**35235 THORIGNE-FOUILLARD (FR)**

(74) Representative: **Vossius & Partner**
**Patentanwälte Rechtsanwälte mbB**
**Siebertstraße 3**
**81675 München (DE)**

(54) **OPTIMIZATION OF MULTI-LAYER RATE DISTORTION DECISION**

(57) Systems, methods, and instrumentalities are disclosed for determining a plurality of candidate modes for encoding a video block. A first distortion associated with a first candidate mode of the plurality of candidate modes may be determined. The first candidate mode may be an inter-layer mode. A second distortion associated with a second candidate mode of the plurality of candidate modes may be determined. Whether the first distortion is less than the second distortion may be determined. A candidate mode may be selected from the plurality of candidate modes based on the determination of whether the first distortion is less than the second distortion. The video block may be encoded based on the selected candidate mode.

FIG. 5

EP 4 727 129 A1

**Description**

**BACKGROUND**

The present application is related to video coding systems that may be used to compress digital video signals, e.g., to reduce the storage and/or transmission bandwidth needed for such signals. Video coding systems may include, for example, block-based, wavelet-based, and/or object-based systems.

**BRIEF SUMMARY**

Systems, methods, and instrumentalities are disclosed for determining a candidate mode. In examples, a plurality of candidate modes for encoding a video block may be determined, for example by a device for video encoding. A first distortion associated with a first candidate mode of the plurality of candidate modes may be determined. For example, the first candidate mode may be an inter-layer mode. A second distortion associated with a second candidate mode of the plurality of candidate modes may be determined. The first distortion and/or the second distortion may be used to select a candidate mode that may be used for coding a video block. For example, whether the first distortion is less than the second distortion may be determined. A candidate mode may be selected from the plurality of candidate modes based on the determination of whether the first distortion is less than the second distortion. The video block may be encoded based on the selected candidate mode.

In examples, the first candidate mode may be selected from the plurality of candidate modes based on a determination that the first distortion is less than the second distortion, wherein the second candidate mode is non-inter-layer mode. The video block may be predicted using an inter-layer reference picture based on the selection of the first candidate mode, and/or the video block may be encoded based on the prediction of the video block. The first candidate mode may be selected further based on a bias (e.g., an inter-layer mode bias). In examples, the bias may be an additive bias or a multiplicative bias. In some examples, the multiplicative bias may include a scaling factor.

Distortion may be used to select a candidate mode from one or more candidate modes, for example, if the candidate mode includes an inter-layer mode. In examples, a (e.g., each) distortion of a respective candidate mode of the plurality of candidate modes may be compared to select the candidate mode, based on a determination that the plurality of candidate modes includes at least one inter-layer mode. The candidate mode may be selected, for example, if the candidate mode has the lowest distortion among the plurality of candidate modes.

In examples, video data may be obtained including a base layer and an enhancement layer. An inter-layer prediction block in an inter-layer reference picture may be obtained by upsampling a block from a base layer picture in the base layer. In some examples, the block from the base layer picture may be a collocated block of the inter-layer prediction block. The inter-layer reference picture may be associated with the base layer. A residual associated with the first candidate mode may be determined based on, for example, the inter-layer prediction block in the inter-layer reference picture. Whether the residual associated with the first candidate mode is equal to zero may be determined. A (e.g., each) distortion of the respective candidate mode of the plurality of candidate modes may be compared to select the candidate mode, for example, if the residual associated with the first candidate mode is equal to zero.

In some examples, a rate-distortion of the second candidate mode may be determined based on a determination that the first distortion is greater than the second distortion. The second candidate mode may be a non-inter-layer mode. The second candidate mode may be selected based on a determination that the rate-distortion of the second candidate mode is less than a rate-distortion of each remaining candidate mode (e.g., a third candidate mode that is a non-inter-layer mode or an inter-layer mode) of the plurality of candidate modes.

In examples, a rate-distortion of the second candidate mode may be determined (e.g., based on a determination that the first distortion is greater than the second distortion). The second candidate mode may be an inter-layer mode. For example, the rate-distortion of the second candidate mode may be determined based on a determination that the first candidate mode is a first inter-layer mode and the second candidate mode is a second inter-layer mode (e.g., further based on a determination that the plurality of candidate modes includes only the first and the second candidate modes). The second candidate mode may be selected based on a determination that the rate-distortion of the second candidate mode is less than the rate-distortion of the first candidate mode.

One or more rate distortion multiplicators may be used to determine a rate distortion. In examples, a first rate distortion associated with the first candidate mode of the plurality of candidate modes may be determined based on a first rate distortion multiplicator and the first distortion. A first rate distortion associated with the second candidate mode of the plurality of candidate modes may be determined based on the first rate distortion multiplicator and the second distortion. Whether the first rate distortion associated with the first candidate mode is less than the first rate distortion associated with the second candidate mode may be determined. If the first rate distortion associated with the first candidate mode is determined to be less than the first rate distortion associated with the second candidate mode, the first candidate mode may be selected. If the first rate distortion associated with the first candidate mode is determined to be equal to or greater than the first rate distortion associated with the second candidate mode, a second rate distortion associated with the first candidate mode may be determined based on a second rate distortion multiplicator and the first distortion, and a second rate distortion associated with the second candidate mode may be determined based on the second rate distortion multiplicator and the second distortion. The candidate mode may be selected based on the second rate distortion associated with the first candidate mode and the second rate distortion associated with the second candidate mode. The first rate distortion multiplicator may be a smaller value than the second rate distortion multiplicator.

The video block may be predicted based on the selected candidate mode. A residual may be generated based on the predicted video block. The residual and an indication of the selected candidate mode may be sent to a device for video decoding.

An image may be generated based on a residual and an indication of a selected candidate mode, for example, by a device for video decoding. The device may include at least one of an antenna configured to receive a signal including the residual and the indication of the selected candidate mode, a band limiter configured to limit the received signal to a band of frequencies, or a display configured to display the image.

## BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.

FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows a current block intra-predicted from neighboring reconstructed samples.
FIG. 5 shows the mode selection process for selecting candidate coding modes if one of the candidate coding modes is an inter-layer coding mode and the other is not an inter-layer coding mode.
FIG. 6 shows prediction for different candidate modes.

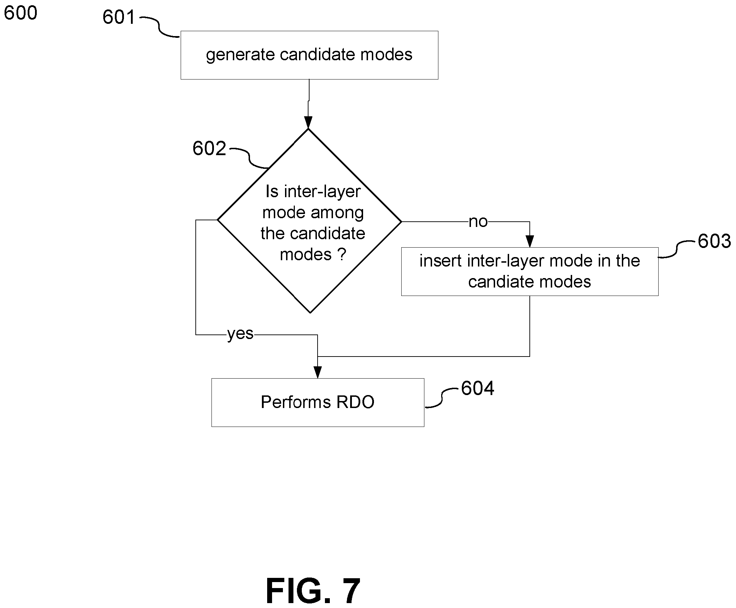

FIG. 7 shows an inter-layer coding mode added as a candidate to be evaluated in the RDO process if an inter-layer reference picture is available in any of the reference picture lists.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

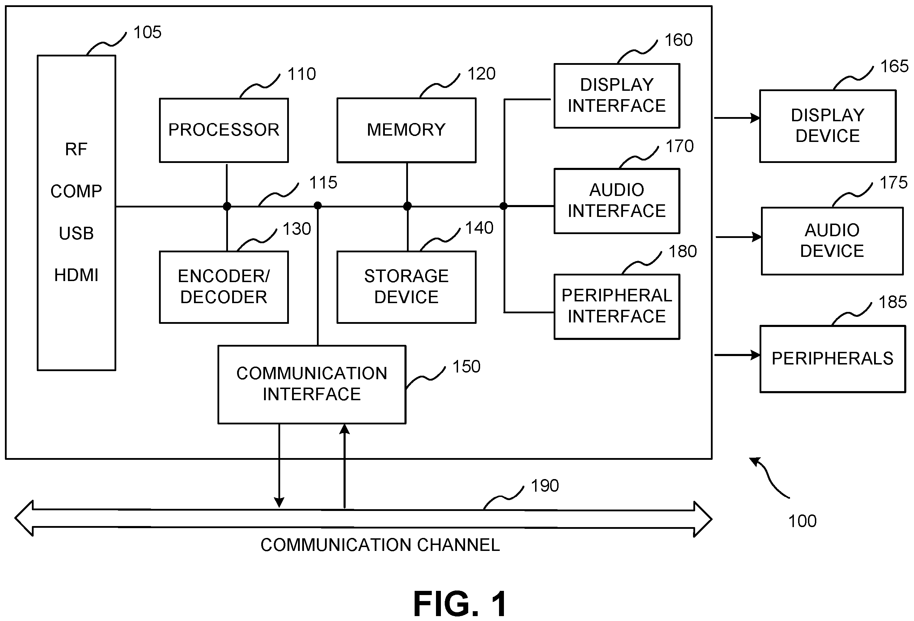

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

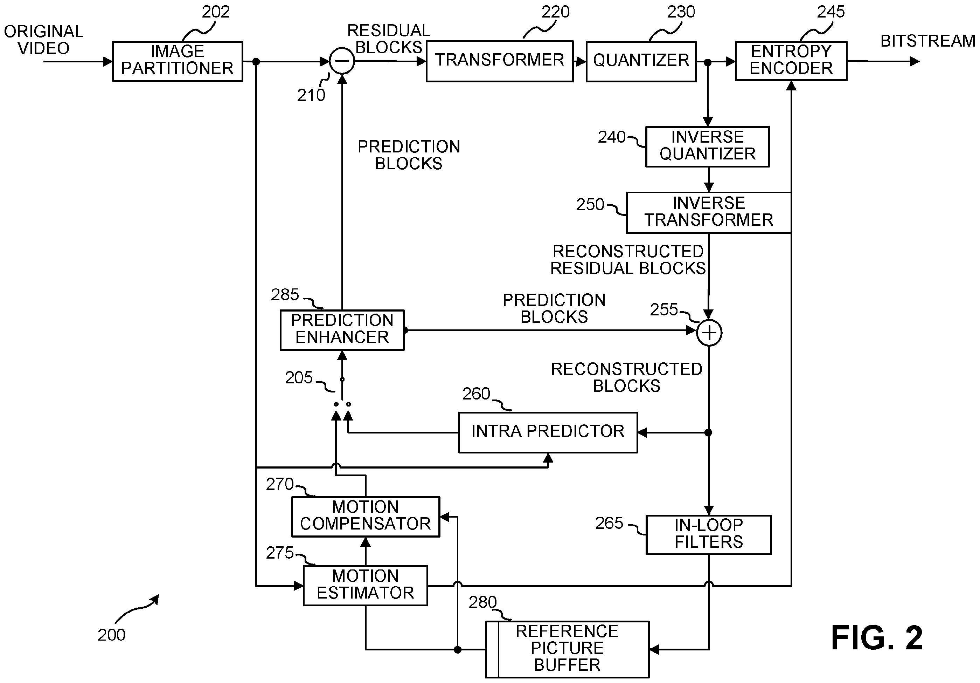

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

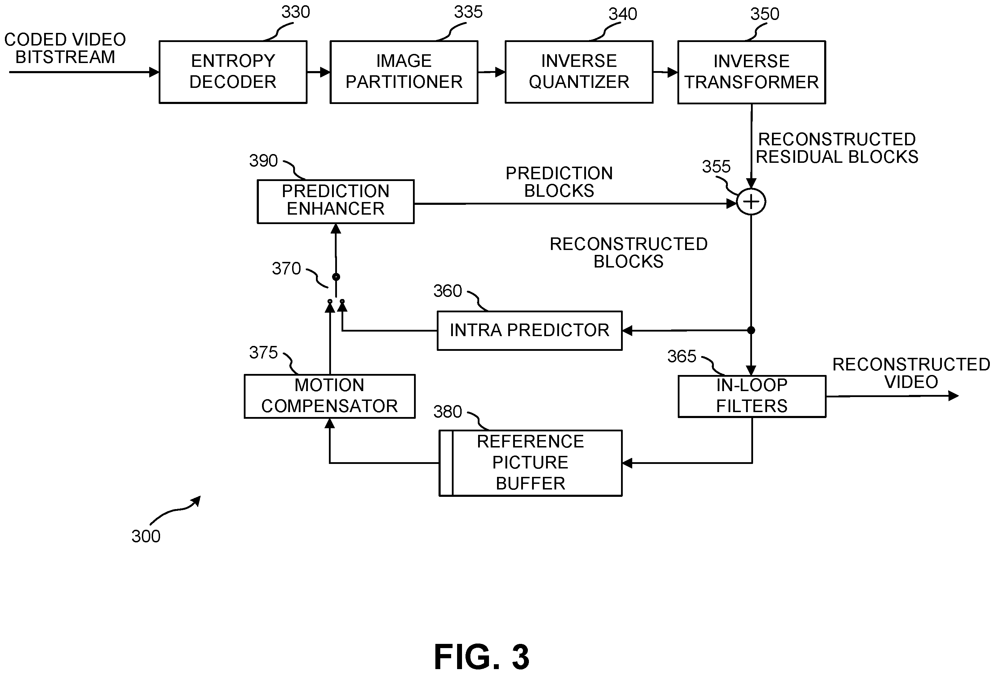

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g., by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Encoding decisions may be adjusted for multi-layer coding where an enhancement layer may be encoded based on a previously coded base layer in the context of video compression. The conventional rate distortion optimization performed by the encoder to determine the coding mode of a (e.g., each) block may result in some blocks of the enhancement layer having a lower quality than their corresponding collocated block in the base layer. Adjustments may be proposed to the rate-distortion decision process for encoding the enhancement layer in order to favor the selection of inter-layer coding modes and avoid such quality degradations.

FIG. 2 illustrates an example of a block-based hybrid video encoder 200. Before being encoded, the video sequence may go through pre-encoding processing (201), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata may be associated with the pre-processing, and/or attached to the bitstream.

In the encoder 200, a picture may be encoded by the encoder elements as described below. The picture to be encoded may be partitioned (e.g., at 202) and/or processed in units of, for example, CUs (Coding Units). A (e.g., each) unit may be encoded using, for example, either an intra or inter mode. For a unit encoded in an intra mode, it may perform intra prediction (e.g., at 260). In an inter mode, motion estimation (e.g., at 275) and compensation (e.g., at 270) may be performed. The encoder may decide (e.g., at 205) which one of the intra mode or inter mode to use for encoding the unit. The encoder may indicate the intra/inter decision by, for example, a prediction mode flag. Prediction residuals may be calculated, for example, by subtracting (e.g., at 210) the predicted block from the original image block.

The prediction residuals may be transformed (e.g., at 225) and/or quantized (e.g., at 230). The quantized transform coefficients, as well as motion vectors and other syntax elements such as the picture partitioning information, may be entropy coded (e.g., at 245) to output a bitstream. The encoder may skip the transform and/or apply quantization (e.g., directly) to the non-transformed residual signal. The encoder may bypass transform and/or quantization (e.g., the residual may be coded directly without the application of the transform or quantization processes).

The encoder may decode an encoded block to provide a reference for further predictions. The quantized transform coefficients may be de-quantized (e.g., at 240) and/or inverse transformed (e.g., at 250) to decode prediction residuals. Combining (e.g., at 255) the decoded prediction residuals and the predicted block, an image block may be reconstructed. In-loop filters (e.g., at 265) may be applied to the reconstructed picture to perform, for example, deblocking/SAO (Sample Adaptive Offset)/ALF (Adaptive Loop Filter) filtering to reduce encoding artifacts. The filtered image may be stored in a reference picture buffer (e.g., at 280).

FIG. 3 illustrates a block diagram of an example video decoder 300. In the decoder 300, a bitstream may be decoded by the decoder elements as described below. Video decoder 300 may (e.g., generally) perform a decoding pass reciprocal to the encoding pass as described in FIG. 2. The encoder 200 may (e.g., generally) perform video decoding as part of encoding video data.

In particular, the input of the decoder may include a video bitstream, which may be generated by video encoder 200. The bitstream may be a first entropy decoded (e.g., at 330) to obtain transform coefficients, prediction modes, motion vectors, and/or other coded information. The picture partition information may indicate how the picture is partitioned. The decoder may therefore divide (e.g., at 335) the picture according to the decoded picture partitioning information. The transform coefficients may be de-quantized (e.g., at 340) and/or inverse transformed (e.g., at 350) to decode the prediction residuals. Combining (e.g., at 355) the decoded prediction residuals and the predicted block, an image block may be reconstructed. The predicted block may be obtained (e.g., at 370) from intra prediction (360) or motion-compensated prediction (e.g., inter prediction) (e.g., at 375). In-loop filters (e.g., at 365) may be applied to the reconstructed image. The filtered image may be stored at a reference picture buffer (e.g., at 380). For a given picture, the contents of the reference picture buffer 380 on the decoder 300 side may be identical to the contents of the reference picture buffer 280 on the encoder 200 side for the same picture.

The decoded picture may go through post-decoding processing (e.g., at 385), for example, an inverse color transform (e.g., conversion from YCbCr 4:2:0 to RGB 4:4:4) or an inverse remapping performing the inverse of the remapping process performed in the pre-encoding processing (e.g., at 201). The post-decoding processing may use metadata derived in the pre-encoding processing and/or signaled in the bitstream.

Several powerful intra prediction modes may be provided. For some of those intra modes, merge mode may be supported. Reference picture resampling may be provided. For performing the temporal prediction (e.g., using motion compensation), reference pictures may be stored in a decoded picture buffer (DPB). A coding tool, reference picture resampling (RPR), may be part of the motion compensation step. It is possible to modify adaptively the resolution of the coded picture, which may result in the fact that reference pictures stored in the DPB may be of various resolutions. RPR may allow performing the prediction of a block with a possible rescaling of the reference block where the reference picture containing the reference block is not of same dimension as the current picture containing the current block.

Systems, methods, and instrumentalities are disclosed for determining a candidate mode. In examples, a plurality of candidate modes for encoding a video block may be determined, for example by a device for video encoding. A first distortion associated with a first candidate mode of the plurality of candidate modes may be determined. For example, the first candidate mode may be an inter-layer mode. A second distortion associated with a second candidate mode of the plurality of candidate modes may be determined. The first distortion and/or the second distortion may be used to select a candidate mode. For example, whether the first distortion is less than the second distortion may be determined. A candidate mode may be selected from the plurality of candidate modes based on the determination of whether the first distortion is less than the second distortion. The video block may be encoded based on the selected candidate mode.

In examples, the first candidate mode may be selected from the plurality of candidate modes based on a determination that the first distortion is less than the second distortion, wherein the second candidate mode is non-inter layer mode. The video block may be predicted using an inter-layer reference picture based on the selection of the first candidate mode, and/or the video block may be encoded based on the prediction of the video block. The first candidate mode may be selected further based on a bias (e.g., an inter-layer mode bias). In examples, the bias may be an additive bias or a multiplicative bias. In some examples, the multiplicative bias may include a scaling factor.

Distortion may be used to select a candidate mode from one or more candidate modes, for example, if the candidate mode includes an inter-layer mode. In examples, a (e.g., each) distortion of a respective candidate mode of the plurality of candidate modes may be compared to select the candidate mode, based on a determination that the plurality of candidate modes includes at least one inter-layer mode. The candidate mode may be selected, for example, if the candidate mode has the lowest distortion among the plurality of candidate modes.

In examples, video data may be obtained including a base layer and an enhancement layer. An inter-layer prediction block in an inter-layer reference picture may be obtained by upsampling a block from a base layer picture in the base layer. In some examples, the block from the base layer picture may be a collocated block of the inter-layer prediction block. The inter-layer reference picture may be associated with the base layer. A residual associated with the first candidate mode may be determined based on, for example, the inter-layer prediction block in the inter-layer reference picture. Whether the residual associated with the first candidate mode is equal to zero may be determined. A (e.g., each) distortion of the respective candidate mode of the plurality of candidate modes may be compared to select the candidate mode, for example, if the residual associated with the first candidate mode is equal to zero.

In some examples, a rate-distortion of the second candidate mode may be determined based on a determination that the first distortion is greater than the second distortion. The second candidate mode may be a non-inter-layer mode. The second candidate mode may be selected based on a determination that the rate-distortion of the second candidate mode is less than a rate-distortion of each remaining candidate mode (e.g., a third candidate mode that is a non-inter-layer mode or an inter-layer mode) of the plurality of candidate modes.

In examples, a rate-distortion of the second candidate mode may be determined (e.g., based on a determination that the first distortion is greater than the second distortion). The second candidate mode may be an inter-layer mode. For example, the rate-distortion of the second candidate mode may be determined based on a determination that the first candidate mode is a first inter-layer mode and the second candidate mode is a second inter-layer mode (e.g., further based on a determination that the plurality of candidate modes includes only the first and the second candidate modes). The second candidate mode may be selected based on a determination that the rate-distortion of the second candidate mode is less than the rate-distortion of the first candidate mode.

One or more rate distortion multiplicators may be used to determine a rate distortion. In examples, a first rate distortion associated with the first candidate mode of the plurality of candidate modes may be determined based on a first rate distortion multiplicator and the first distortion. A first rate distortion associated with the second candidate mode of the plurality of candidate modes may be determined based on the first rate distortion multiplicator and the second distortion. Whether the first rate distortion associated with the first candidate mode is less than the first rate distortion associated with the second candidate mode may be determined. If the first rate distortion associated with the first candidate mode is determined to be less than the first rate distortion associated with the second candidate mode, the first candidate mode may be selected. If the first rate distortion associated with the first candidate mode is determined to be equal to or greater than the first rate distortion associated with the second candidate mode, a second rate distortion associated with the first candidate mode may be determined based on a second rate distortion multiplicator and the first distortion, and a second rate distortion associated with the second candidate mode may be determined based on the second rate distortion multiplicator and the second distortion. The candidate mode may be selected based on the second rate distortion associated with the first candidate mode and the second rate distortion associated with the second candidate mode. The first rate distortion multiplicator may be a smaller value than the second rate distortion multiplicator.

The video block may be predicted based on the selected candidate mode. A residual may be generated based on the predicted video block. The residual and an indication of the selected candidate mode may be sent to a device for video decoding.

An image may be generated based on a residual and an indication of a selected candidate mode, for example, by a device for video decoding. The device may include at least one of an antenna configured to receive a signal including the residual and the indication of the selected candidate mode, a band limiter configured to limit the received signal to a band of frequencies, or a display configured to display the image.

Design of multi-layer coding may be provided. Multi-layer coding may be supported. Video data may include a base layer and/or an enhancement layer. For example, where 2 layers are considered, a base layer and/or an enhancement layer may be produced. The base layer may correspond to the coding of the video at a lower resolution, or lower quality, than the enhancement layer. In multi-layer coding in WC, inter-layer prediction of a picture in the enhancement layer may be enabled by putting the reconstructed picture of the base layer of the (e.g., same) temporal instant into the list of the reference pictures. The rest of the low-level design of mono-layer coding may not be modified. When the base layer is of lower resolution than the enhancement layer, RPR may be used to produce prediction blocks at the proper resolution (e.g., the one of the enhancement layer).

The encoder may perform a rate-distortion optimization (RDO). RDO may aim at choosing the best encoding modes amongst all possible coding parameters P={p0,p1,...,pn} for a (e.g., every block). For a (e.g., each) tested candidate mode p, the prediction may be computed with the prediction mode. A residual may be computed and/or transformed using the candidate transform mode. A distortion (D) between the reconstructed block and the original input block for the candidate may be computed. The number of bits (R) may be computed to evaluate the cost in bits of the mode and residual coding. For example, the sum of square errors (SSE) or the Sum of Absolute Differences (SAD), computed over the samples of the block, may be used to compute D. A simulation of encoding may be done using, for example, a binary encoding such as the Context Adaptive Binary Arithmetic Coding (CABAC) engine and/or the number of bits extracted.

A cost for the given parameter set p may be evaluated as a joint optimization of R and D (e.g., a rate-distortion), for example, using a Lagrangian multiplicator (Lambda, A) as in the RDO equation below:

$$C(p)=D(p)+ \lambda*R(p)$$

The chosen or selected coding mode q may be the one minimizing C:

$$q=\min_p C(p)$$

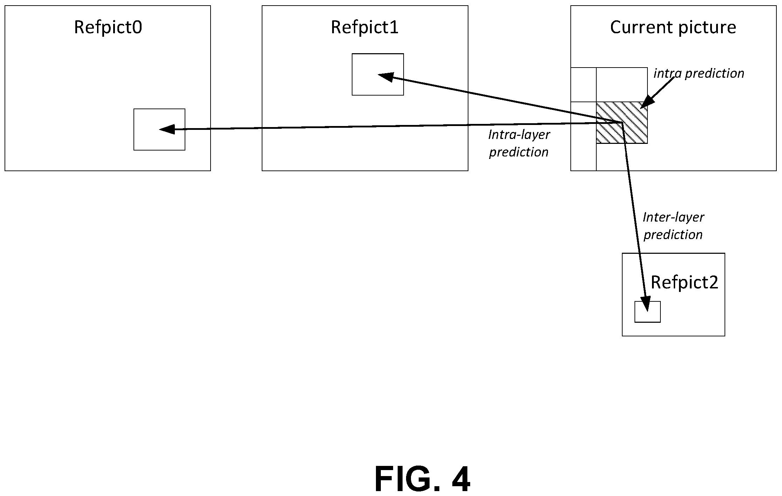

In examples, for coding of an enhancement layer block, one of the candidate modes may be inter-layer prediction, corresponding to the prediction of the block from a reference picture belonging to the base layer. Other candidate modes may be the intra prediction modes, and/or the inter-prediction modes from reference pictures belonging to the enhancement layer (e.g., intra-layer prediction). This is illustrated in FIG. 4 where a current block may be intra-predicted from neighboring reconstructed samples (e.g., blocks) of the (e.g., same) picture, or intra-layer predicted from reference pictures of the (e.g., same) layer, or inter-layer predicted from a reference picture corresponding to the base layer picture of an (e.g., same) instant as the current enhancement layer picture. The inter-layer predictions may correspond to inter prediction modes where the reference picture used for the prediction may be an inter-layer reference picture (e.g., belonging to the base layer). Inter-predictions may be performed from more than one reference picture (e.g., by blending motion compensated blocks from two reference pictures), and/or an inter-prediction mode may use intra-layer reference pictures and/or inter-layer reference pictures.

To speed-up the RDO process, it may be implemented in two passes, one fast pass involving light computations to perform a pre-selection of the mode, and/or one full pass where the pre-selected modes may be assessed using a complete RDO evaluation to select the best mode.

In examples, in the first pass, the real coding cost associated to a candidate mode may not be computed but may be evaluated using an approximation method. The distortion may not be computed using the real reconstructed samples, but by computing the distortion between the prediction and the original signal. For example, distortion may be computed as the Sum of Absolute Transform Difference between the prediction and the original signal. The rate-distortion cost may be computed from these estimated coding cost and distortion.

In the second pass, the complete process may be applied. The prediction may be computed, the prediction residual may be derived, it may be transformed, quantized, inverse quantized, inverse transformed and/or added to the prediction residual to generate the reconstructed samples. The real distortion may be computed from the difference between the reconstructed samples and/or the original ones. The real cost of the coding of the mode, and/or of the transformed and/or quantized residual may be computed. The rate-distortion cost may be computed from these real coding cost(s) and/or distortion(s).

Wrong motion, edge duplication, blurring on dark and/or smooth areas may appear on the enhancement layer (e.g., compared to an upscaled base layer), mostly due to a wrong selection of reference picture during enhancement layer coding: intra layer reference is selected to code a high-detail area as expected, but that selection may propagate to (e.g., adjacent) smoother areas because of wrong encoder decisions.

Significant temporal pumping may occur. Some washouts of smoother areas may occur (e.g., the washouts may be worse in dual layer than upscale). Blocking artifacts may be sharper in dual layer than for upscale, which may be due to higher resolution. Wrong encoder decisions may lead to issues in the rate-distortion optimization.

The rate-distortion optimization may be modified by favoring more the inter-layer prediction. In examples, where comparing inter-layer coding mode with other (e.g., non-inter-layer) modes, the inter-layer coding mode may be selected if it results in lower distortion (e.g., regardless of its rate-distortion cost).

In examples, where comparing inter-layer coding mode with other (e.g., non-inter-layer) modes, the inter-layer coding mode may be selected if it has a lower rate-distortion cost computed with an adjusted Lagrangian parameter (e.g., regardless of its rate-distortion cost with the original Lagrangian parameter). An inter-layer prediction mode may be added to be evaluated if an inter-layer reference picture is available.

In examples, pre-selection of at least one inter-layer prediction mode may be forced in the fast pre-selection pass.

In examples, the inter-layer coding mode may be selected (e.g., only) based on the distortion. In an example, an inter-layer mode (e.g., an inter-layer coding mode) may include one or more of the following. For example, any inter coding mode using at least one inter-layer reference picture may be considered as an inter-layer mode. In another example, an inter coding mode may be considered as an inter-layer mode if it uses only inter-layer reference pictures. In examples, an inter coding mode may be considered an inter-layer mode if it uses an inter-layer reference picture and/or if the associated motion vector is null (e.g., the prediction block from the inter-layer reference picture is collocated with the current block to predict in the enhancement layer). Any of these variations associated with an inter-layer mode may be applicable to one or more examples as described herein.

In examples, when distortion of an inter-layer coding mode is the lowest one among other coding modes that are not inter-layer modes, the inter-layer mode may be selected (e.g., regardless of its cost). The distortion of (e.g., all) the candidate modes may be evaluated. If the inter-layer coding mode has the lowest distortion, it may be selected. Otherwise, the normal selection process may be applied (e.g., using RDO evaluation).

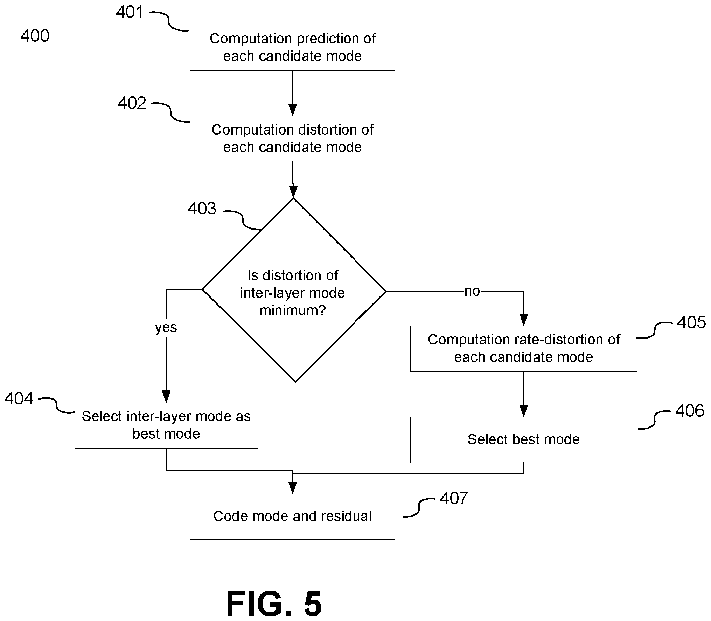

The process is described in FIG.5. At 401, the prediction for different candidate modes may be performed. At 402, the distortion for the different candidate modes may be derived (e.g., each distortion of a respective candidate mode of the different candidate modes may be determined). A check at 403 may determine whether the inter-layer coding mode provides the lowest distortion among (e.g., all) the candidate mode(s). For example, a first distortion of a first candidate mode (e.g., an inter-layer mode) may be compared with a second distortion of a second candidate mode (e.g., a non-inter-layer mode). The first distortion may be less than, equal to, or greater than the second distortion. For example, the first candidate mode may be selected if the first distortion is less than the second distortion, wherein the first candidate mode is an inter-layer coding mode and the second candidate mode is non-inter layer mode. In examples, if inter-layer distortion is the lowest, the inter-layer coding mode may be selected as the best mode (e.g., at 404).

If the first distortion is equal to or greater than the second distortion, a rate-distortion may be used to select a candidate mode. In examples, if inter-layer distortion is not the lowest one, the rate-distortion cost may be computed for (e.g., all) the candidate mode(s) (e.g., at 405). The mode providing the lowest rate-distortion cost may be selected as the (e.g., best) mode (e.g., at 406). The final prediction may be derived. The selected mode and/or residuals may be coded by the entropy coder.

In examples, there may be more than one inter-layer coding modes to be evaluated. The mode selection process described in FIG.5 may be used for selecting (e.g., the best of two) candidate coding modes (e.g., only) if one of the candidate coding modes is an inter-layer coding mode and the other is not an inter-layer coding mode. Otherwise (e.g., both candidate coding modes are inter-layer coding modes or both are non-inter-layer coding modes), the mode providing the lowest rate-distortion cost may be selected (e.g., as the best mode as in 405 and/or 406). The selection of the best coding mode among the (e.g., all) candidates may be performed iteratively, for example, by evaluating each mode successively where the currently evaluated mode is compared with the previously selected mode following this selection process.

A device may determine whether a distortion or a rate-distortion (e.g., a distortion comparison or a rate-distortion comparison) is to be used to select a candidate mode. A condition may include, for example, whether an inter-layer mode is included in the evaluation for the selection of the candidate mode. In examples, an additional condition may be used (e.g., at 403) to decide whether the inter-layer coding mode is selected based on the distortion (e.g., at 404) or based on the rate distortion (e.g., at 405 and/or 406). In examples, an additional condition may be that the inter-layer coding mode has zero residual (e.g., all the transform coefficients of the block are equal to zero). For example, a device (e.g., an encoder) may

**EP 4 727 129 A1**

obtain an inter-layer prediction block in an inter-layer reference picture by upsampling a block from a base layer picture in the base layer. For example, the block from the base layer picture may be a collocated block of the inter-layer prediction block. The inter-layer reference picture may be associated with the base layer. The device may determine a residual associated with a first candidate mode (e.g., an inter-layer mode) of one or more candidate modes based on the inter-layer prediction block in the inter-layer reference picture. The device may determine whether the residual associated with the first candidate mode is equal to zero. For example, based on a condition that the residual associated with the first candidate mode is equal to zero, the distortion of the respective candidate mode of the plurality of candidate modes may be compared to select a candidate mode. The decision process may ensure that the quality of the final reconstructed block is at least as good (e.g., with respect to distortion metric) as the inter-layer prediction block (e.g., direct upsampling of the collocated block in the base layer, if the inter-layer coding mode uses only an inter-layer reference picture and has a null motion vector).

In examples, the inter-layer coding mode may be selected (e.g., only) based on the distortion and a threshold (e.g., a bias). In examples, a threshold may be used when comparing an inter-layer mode distortion with a non-inter-layer mode: the non-inter-layer mode may be selected, if it has a significantly lower distortion, by a specific threshold (e.g., if equation 1 is true). The threshold may be an adjustable encoder parameter.

$$D(inter\text{-}layer\ mode) + threshold <= D(non\text{-}inter\text{-}layer\ mode) \qquad (1)$$

In examples, the threshold may be multiplicative (e.g., as in equation 2) or additive (e.g., as in eq 1):

$$D(inter\text{-}layer\ mode) * (1 + threshold) <= D(non\text{-}inter\text{-}layer\ mode) \qquad (2)$$

In examples, (1 + threshold) may be expressed (e.g., equivalently) as a scaling factor.

In examples, a 2-step selection may be performed with (e.g., different) Lagrangian multiplicators. In examples, a selection (e.g., first selection) may be made based on the distortion (e.g., distortion-only), which may be similar (e.g., equivalent) to performing a first RDO with A = 0.

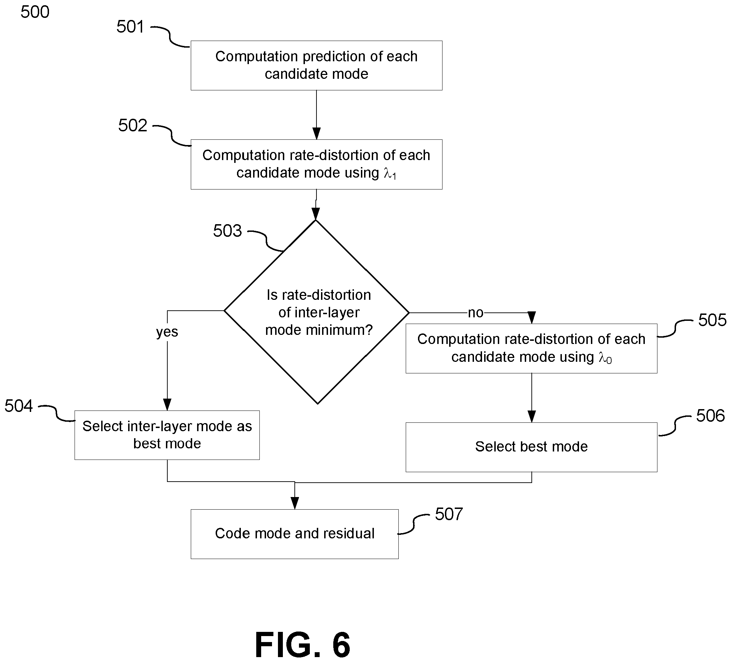

In examples, multiple rate distortion multiplicators (e.g., two different Lagrangian multiplicator values $\lambda_0$ and $\lambda_1$) may be used. For example, a first rate distortion multiplicator (e.g., $\lambda_1$) may be used for the first selection, and/or a second rate distortion multiplicator (e.g., $\lambda_0$) may be used for the second selection. The process is described in FIG. 6. At 501, the prediction for the different candidate modes may be performed. At 502, the rate-distortion cost for the different candidate modes may be derived using the rate distortion multiplicator, $\lambda_1$. At 503 a check may be performed whether the inter-layer coding mode provides the lowest rate-distortion cost among all the available candidate modes. If inter-layer rate-distortion cost is the lowest one, the inter-layer coding mode may be selected as the best mode (504). At 505, if inter-layer rate-distortion cost is not the lowest one, the rate-distortion cost may be computed for each of the available candidate modes using the rate distortion multiplicator, $\lambda_0$. At 506, the mode providing the lowest rate-distortion cost may be selected as the best mode. The final prediction may be derived. The selected mode and residuals may be coded by the entropy coder.

To favor the inter-layer prediction, $\lambda_1$ may be lower than $\lambda_0$. For example, $\lambda_1 = 0.1 * \lambda_0$.

In examples, the normal rate-distortion process may be used. Lambda may be selected based on a reference picture, or whether or not the coding mode uses inter-layer prediction.

In examples, when computing a rate-distortion cost involving an inter-layer coding mode, a threshold may be subtracted, and/or a scaling factor may be applied to the distortion.

An inter-layer prediction mode may be added to be evaluated.

An inter-layer coding mode may not be evaluated for a block. For example, in merge or skip modes, several merge candidates may be evaluated in the RDO process. The list of merge candidates may be constructed using a fixed process (e.g., same for the encoder and decoder) which may not guarantee that there is any inter-layer coding mode in the list of merge candidates to be evaluated in the RDO (e.g., all the merge candidates may use only non-inter-layer reference pictures). In the Adaptive Motion Vector Prediction (AMVP), a motion estimation may be used by the encoder to select the reference picture(s) and/or the associated motion vector(s). This motion estimation step may not always select an inter-layer reference picture. When an AMVP coding mode is selected by the RDO process, the following syntax may be signaled in the bitstream: an inter direction value indicating if a single reference picture is used from a first reference picture list (RPL) L0, or from a second RPL L1, or if two references pictures are selected, (e.g., one from L0 and one from L1); the index of (e.g., each) selected reference picture in the corresponding RPL; an index *mvpIdx* of the motion vector predictor candidate for each selected reference picture; and a motion vector difference (MVD) for each reference picture, corresponding to the difference between the motion vector obtained with motion estimation and the motion vector predicted with the motion vector predictor.

In examples, an inter-layer coding mode may be added as a candidate to be evaluated in the RDO process if an inter-layer reference picture is available in any of the reference picture lists (e.g., L0 or L1). The process is illustrated in FIG.

7. At 602, various candidate modes may be generated. At 602, it may be checked whether the set of candidate modes includes one inter-layer mode. If the set of candidate modes does not include one inter-layer mode, an inter-layer mode may be inserted in the set of candidate modes (e.g., added, or inserted in replacement of another candidate mode) (e.g., at 603). At 604, RDO may be performed. If the set of candidate modes does include at least one inter-layer mode, the RDO may be (e.g., directly) performed at 604.

The added inter-layer coding mode may be an AMVP mode using a single reference picture corresponding to an inter-layer reference picture, and with a null motion vector. The motion vector may be (e.g., explicitly) set to zero by selecting a motion vector predictor among the motion vector predictor candidates and/or setting the MVD equal to the opposite of the predicted motion vector. The motion vector predictor candidate may be selected to minimize the signaling cost (e.g., number of bits) of the corresponding index *mvpIdx* and/or the resulting MVD. If (e.g., only) one of the RPLs contains an inter-layer reference picture or if (e.g., only) one RPL is available (e.g., in a P slice), the inter direction value may be set to use this RPL. If several RPLs are available and/or contain an inter-layer reference picture (e.g., both L0 and L1), the inter direction value may be set to minimize the signaling cost of the inter direction value and the reference index of the inter-layer reference in the corresponding list.

In examples, if the L0 and/or L1 RPLs may be available (e.g., in a B slice) and/or include an inter-layer reference picture, an additional inter-layer coding mode candidate may be constructed as an AMVP mode using the L0 and/or L1 reference picture lists. The reference index of the inter-layer reference picture may be selected for the L0 and/or L1 reference picture lists, (e.g., each) associated with a null motion vector. This inter-layer coding mode constructed with the L0 and/or L1 reference picture lists and/or the one (e.g., the list) constructed with (e.g., only) one RPL may be expected to perform the same prediction but with different signaling costs. Hence, among these two candidates, (e.g., only) the candidate that has the lowest signaling cost may be evaluated in the full RDO evaluation.

In examples, explicit evaluation of an inter-layer coding mode may be (e.g., only) performed even if there are already no other inter-layer coding modes (e.g., previously) evaluated in the RDO process among the candidate modes (e.g., after merge and/or skip candidates' evaluation, regular AMVP coding modes evaluation candidates, etc.).

Pruning of inter-layer coding modes in the first RDO pass may be prevented. Even if an inter-layer coding mode is available (e.g., in the merge candidates or AMVP candidates), it may not be pre-selected by the first RDO pass using fast estimation of the RDO cost (e.g., only the candidates with a fast cost estimation below a threshold may be pre-selected). If a mode is not pre-selected, it may not be evaluated in the complete RDO evaluation.

In examples, if any inter-layer coding mode is available, at least one of the available inter-layer coding modes may be forced to be pre-selected by the first pass. For example, a coding mode may be forced to be pre-selected by the first pass by including it in the list of candidate modes to be evaluated in the complete RDO, even if the coding mode does not satisfy the criterion of the first pass based on the fast estimation of the RDO cost (e.g., a forced coding mode may be pre-selected even if its fast estimation of the RDO cost is higher than a threshold). If several inter-layer coding modes are available, they may be (e.g., all) forced to be pre-selected by the first pass. In examples, at most N (e.g., N=1) of the inter-layer coding mode candidates may be forced to be pre-selected by the first pass. The forced candidates may be the (e.g., at most) N candidates with the lowest cost estimated in the first pass among all the inter-layer coding modes candidates.

Where the total number of pre-selected coding mode candidates (either inter-layer or not) is limited to a maximum number max_total_cand, the number N of forced inter-layer candidates may not be higher than max_total_cand. In the first pass, if the total number total cand_num of pre-selected candidates (e.g., including both the forced inter-layer candidates, and/or all the other pre-selected candidates) becomes higher than max_total_cand, a number of candidates total_cand_num - max_total_cand may be removed from the list of pre-selected candidates. The total_cand_num - max_total_cand candidates with the highest cost among the non-forced candidates (e.g., only the total cand_num - max_total_cand candidates with the highest cost among the non-forced candidates) may be removed.

In examples, when evaluating the merge candidates, a first RDO pass may be applied to preselect a maximum number max_total_cand of candidates among the merge candidates. If at least one inter-layer coding mode is present in the list of merge candidates, (e.g., at most) N of the merge candidates that are inter-layer coding modes may be forced to be pre-selected by the first RDO pass for the complete RDO evaluation.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

i. Encoding, into coded video data, syntax elements that can enable the decoder to decode the coded video data, according to any of the embodiments described herein.

ii. Video data (e.g., a bitstream) that may include one or more of the described syntax elements, or variations thereof, whether transmitted, stored, or otherwise made available.

iii. Creating, transmitting, receiving, and/or decoding of the bitstream.

iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for dequantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of" is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1.   A device for video encoding, comprising:
   a processor configured to:

   determine a plurality of candidate modes for encoding a video block;
   determine a first distortion associated with a first candidate mode of the plurality of candidate modes, wherein the first candidate mode is an inter-layer mode;
   determine a second distortion associated with a second candidate mode of the plurality of candidate modes;
   determine whether the first distortion is less than the second distortion;
   select a candidate mode from the plurality of candidate modes based on the determination of whether the first distortion is less than the second distortion; and
   encode the video block based on the selected candidate mode.

2.   The device of claim 1, wherein the processor is further configured to:

   select the first candidate mode from the plurality of candidate modes based on a determination that the first distortion is less than the second distortion, wherein the second candidate mode is non-inter layer mode; and
   predict the video block using an inter-layer reference picture based on the selection of the first candidate mode, wherein the video block is encoded based on the prediction of the video block.

3.   The device of claim 2, wherein the first candidate mode is selected further based on an inter-layer mode bias, wherein the inter-layer mode bias is an additive bias or a multiplicative bias, and wherein the multiplicative bias comprises a scaling factor.

4. The device of claim 1, wherein the processor is further configured to, based on a determination that the plurality of candidate modes comprises at least one inter-layer mode, compare each distortion of a respective candidate mode of the plurality of candidate modes to select the candidate mode.

5. The device of claim 4, wherein the candidate mode is selected based on the candidate mode having the lowest distortion among the plurality of candidate modes.

6. The device of claim 4, wherein the processor is further configured to:

obtain video data comprising a base layer and an enhancement layer;
obtain an inter-layer prediction block in an inter-layer reference picture by upsampling a block from a base layer picture in the base layer, wherein the inter-layer reference picture is associated with the base layer
determine a residual associated with the first candidate mode based on the inter-layer prediction block in the inter-layer reference picture; and
determine whether the residual associated with the first candidate mode is equal to zero, wherein, based on a condition that the residual associated with the first candidate mode is equal to zero, the distortion of the respective candidate mode of the plurality of candidate modes is compared to select the candidate mode.

7. The device of claim 1, wherein the processor is further configured to:

determine a rate-distortion of the second candidate mode based on a determination that the first distortion is equal to or greater than the second distortion, wherein the second candidate mode is a non-inter-layer mode; and
select the second candidate mode based on a determination that the rate-distortion of the second candidate mode is less than a rate-distortion of each remaining candidate mode of the plurality of candidate modes.

8. The device of claim 1, wherein the processor is further configured to:

determine a rate-distortion of the second candidate mode based on a determination that the first candidate mode is a first inter-layer mode, and the second candidate mode is a second inter-layer mode; and
select the second candidate mode based on a determination that the rate-distortion of the second candidate mode is less than the rate-distortion of first candidate mode.

9. The device of claim 1, wherein the processor is further configured to:

determine a first rate distortion associated with the first candidate mode of the plurality of candidate modes based on a first rate distortion multiplicator and the first distortion;
determine a first rate distortion associated with the second candidate mode of the plurality of candidate modes based on the first rate distortion multiplicator and the second distortion; and
determine whether the first rate distortion associated with the first candidate mode is less than the first rate distortion associated with the second candidate mode.

10. The device of claim 9, wherein the processor is further configured to:

determine that the first rate distortion associated with the first candidate mode is less than the first rate distortion associated with the second candidate mode; and
select the first candidate mode based on the determination that the first rate distortion associated with the first candidate mode is less than the first rate distortion associated with the second candidate mode.

11. The device of claim 9, wherein the processor is further configured to:

determine that the first rate distortion associated with the first candidate mode is equal to or greater than the first rate distortion associated with the second candidate mode; and
based on the determination that the first rate distortion associated with the first candidate mode is equal to or greater than the first rate distortion associated with the second candidate mode, determine a second rate distortion associated with the first candidate mode based on a second rate distortion multiplicator and the first distortion and determine a second rate distortion associated with the second candidate mode based on the second rate distortion multiplicator and the second distortion, wherein the candidate mode is selected based on the second rate distortion associated with the first candidate mode and the second rate distortion associated with the second candidate mode, and wherein the first rate distortion multiplicator is a smaller value than the second rate distortion multiplicator.

12. A method for video encoding, comprising:

determining a plurality of candidate modes for encoding a video block;
determining a first distortion associated with a first candidate mode of the plurality of candidate modes, wherein the first candidate mode is an inter-layer mode;
determining a second distortion associated with a second candidate mode of the plurality of candidate modes;
determining whether the first distortion is less than the second distortion;
selecting a candidate mode from the plurality of candidate modes based on the determination of whether the first distortion is less than the second distortion; and
encoding the video block based on the selected candidate mode.

13. The method of claim 12, comprising:

selecting the first candidate mode from the plurality of candidate modes based on a determination that the first distortion is less than the second distortion, wherein the second candidate mode is non-inter layer mode; and
predicting the video block using an inter-layer reference picture based on the selection of the first candidate mode, wherein the video block is encoded based on the prediction of the video block.

14. The method of claim 12, further comprising, based on a determination that the plurality of candidate modes comprises at least one inter-layer mode, comparing each distortion of a respective candidate mode of the plurality of candidate modes to select the candidate mode.

15. The method of claim 14, wherein the candidate mode is selected based on the candidate mode having the lowest distortion among the plurality of candidate modes.

**FIG. 1**

FIG. 2

EP 4 727 129 A1

**FIG. 3**

**FIG. 4**

EP 4 727 129 A1

400

401 — Computation prediction of
each candidate mode

402 — Computation distortion of
each candidate mode

403 — Is distortion of
inter-layer mode
minimum?

no — 405 — Computation rate-distortion of
each candidate mode

yes

404 — Select inter-layer mode as
best mode

406 — Select best mode

407 — Code mode and residual

**FIG. 5**

**FIG. 6**

EP 4 727 129 A1

**FIG. 7**

Europäisches
Patentamt

European
Patent Office

Office européen
des brevets

## EUROPEAN SEARCH REPORT

**Application Number**

EP 24 30 6659

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SEON-TAE KIM ET AL: "Fast mode decision algorithm for inter-layer coding in scalable video coding", IEEE TRANSACTIONS ON CONSUMER ELECTRONICS, IEEE SERVICE CENTER, NEW YORK, NY, US, vol. 55, no. 3, 1 August 2009 (2009-08-01), pages 1572-1580, XP011277829, ISSN: 0098-3063, DOI: 10.1109/TCE.2009.5278029 * abstract * * Section I * | 1-15 | INV. H04N19/33 H04N19/103 H04N19/147 H04N19/176 H04N19/187 |
| A | US 2021/266532 A1 (HENRY FELIX [FR] ET AL) 26 August 2021 (2021-08-26) * paragraph [0204] * | 1-15 | |
| A | US 2022/345691 A1 (LI LING [KR] ET AL) 27 October 2022 (2022-10-27) * paragraph [0115] * | 1-15 | |
| A | DE LAGRANGE (INTERDIGITAL) P ET AL: "AHG4: experiments related to VVC spatial scalability visual testing", 32. JVET MEETING; 20231013 - 20231020; HANNOVER; (THE JOINT VIDEO EXPLORATION TEAM OF ISO/IEC JTC1/SC29/WG11 AND ITU-T SG.16 ), , no. JVET-AF0186 17 October 2023 (2023-10-17), XP030312358, Retrieved from the Internet: URL:https://jvet-experts.org/doc_end_user/documents/32_Hannover/wg11/JVET-AF0186-v2.zip JVET-AF0186-v2.docx [retrieved on 2023-10-17] * abstract * * Section 2.4 * | 1-15 | TECHNICAL FIELDS SEARCHED (IPC)<br><br>H04N |

-/--

The present search report has been drawn up for all claims

| Place of search | Date of completion of the search | Examiner |
|---|---|---|
| The Hague | 8 April 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................................
& : member of the same patent family, corresponding document

EPO FORM 1503 03.82 (P04C01)

page 1 of 2

Europäisches
Patentamt

European
Patent Office

Office européen
des brevets

## EUROPEAN SEARCH REPORT

**Application Number**

EP 24 30 6659

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIMA LIVIO ET AL: "Optimal rate adaptation in the scalable extension of H.264/AVC with combined scalability", 18TH EUROPEAN SIGNAL PROCESSING CONFERENCE (EUSIPCO-2010), AALBORG, DENMARK, AUGUST 23-27, 2010, IEEE, 29 August 2011 (2011-08-29), pages 21-25, XP032757179, ISSN: 2076-1465 [retrieved on 2015-03-31] * Section 3.1 * ----- | 1-15 | |
| A | US 2013/188690 A1 (KIM TAE JUNG [KR] ET AL) 25 July 2013 (2013-07-25) * paragraph [0070] * * figure 4 * ----- | 6 | |
| | | | **TECHNICAL FIELDS SEARCHED (IPC)** |

The present search report has been drawn up for all claims

| Place of search | Date of completion of the search | Examiner |
|---|---|---|
| The Hague | 8 April 2025 | Molina Sedgwick, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 6659

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2025

| Patent document cited in search report | Publication date | Patent family member(s) | Publication date |
|---|---|---|---|
| US 2021266532 A1 | 26-08-2021 | BR 112020025069 A2 | 23-03-2021 |
| | | CN 112313955 A | 02-02-2021 |
| | | CN 118555386 A | 27-08-2024 |
| | | EP 3815369 A1 | 05-05-2021 |
| | | EP 4468705 A1 | 27-11-2024 |
| | | ES 2996937 T3 | 13-02-2025 |
| | | FR 3081657 A1 | 29-11-2019 |
| | | JP 7466470 B2 | 12-04-2024 |
| | | JP 2021530141 A | 04-11-2021 |
| | | JP 2024056766 A | 23-04-2024 |
| | | KR 20210024107 A | 04-03-2021 |
| | | PL 3815369 T3 | 10-02-2025 |
| | | US 2021266532 A1 | 26-08-2021 |
| | | WO 2020002796 A1 | 02-01-2020 |
| | | ZA 202007674 B | 26-06-2024 |
| US 2022345691 A1 | 27-10-2022 | CN 115462077 A | 09-12-2022 |
| | | EP 4107948 A1 | 28-12-2022 |
| | | JP 7478841 B2 | 07-05-2024 |
| | | JP 2023527662 A | 30-06-2023 |
| | | KR 20220159464 A | 02-12-2022 |
| | | US 2022345691 A1 | 27-10-2022 |
| | | WO 2022232786 A1 | 03-11-2022 |
| US 2013188690 A1 | 25-07-2013 | KR 20130085088 A | 29-07-2013 |
| | | US 2013188690 A1 | 25-07-2013 |

EPO FORM P0459

For more details about this annex : see Official Journal of the European Patent Office, No. 12/82